# EUROPEAN PATENT APPLICATION

(11) **EP 2 880 988 A1**
(43) Date of publication of application: **10.06.2015**
(21) Application number: 13827897.3
(22) Date of filing: 06.08.2013
(51) Int. Cl.: A23F 5/44

(54) **COFFEE SUBSTITUTE**

(30) Priority: 06.08.2012 JP 2012173817
(71) Applicant: Kirin Beverage Company, Limited, Tokyo 101-8645 (JP)
(72) Inventor: DEUCHI, Keiji, Tokyo 164-0001 (JP); KOIZUMI, Hideki, Tokyo 164-0001 (JP); OKUMURA, Ryohhei, Tokyo 164-0001 (JP); KUMATA, Noriko, Tokyo 164-0001 (JP); SHINOHARA, Hiroyuki, Tokyo 164-0001 (JP)
(74) Representative: Hoffmann Eitle
(86) International application number: PCT/JP2013/004736
(87) International publication number: WO 2014/024470

(57) **Abstract**

With an object of providing a coffee substitute imparted with the distinctive coffee flavor and taste while also having a reduced amount of component such as caffeine, which is included as a main component of coffee but sometimes undesirable for reasons of physiological activity and health, the present invention solves the object by producing a coffee substitute by subjecting a raw material composition formed by combining an amino acid, chlorogenic acid and sugar to a roasting process. More specifically, the present invention produces a product having the taste of coffee by Maillard reaction of a sugar and amino acids in the presence of a chlorogenic acid. Since caffeine is not included in the product, foods and drinks produced using this product consequently have a coffee-like taste without including caffeine, thereby achieving foods and drinks for consumers to enjoy the coffee flavor without ingesting caffeine.

## Description

### Technical Field

The present invention relates to a coffee substitute for foods and drinks use having a coffee-like flavor and useful to be a coffee-like beverage or to be an additive for preparing a foods and drinks imparted with coffee flavor and a method for producing the same, and specifically relates to a coffee substitute having coffee-like flavor and taste prepared by subjecting a raw material composition formed by combining amino acids, a chlorogenic acid and a sugar to a roasting process and a method for producing the same.

### Background Art

Coffee is a luxurious and preferred beverage prepared by roasting coffee beans and has been deeply cherished in everyday life from old times due to the distinctive bitterness together with the refreshing sensation and fatigue recovery effect (relaxing effect) caused from the central nervous system stimulating action. In recent years, not only a coffee extract itself is enjoyed as a beverage using the flavor distinctive of coffee, but also various beverages and various foods are prepared using a coffee extract or concentrated products thereof.

Green coffee bean, the coffee raw material to be roasted, consists of, as the main components, 5 to 10% of polyphenols such as chlorogenic acids, 10 to 15% of fats, 5 to 8% of carbohydrate in the form of free saccharides, 50 to 55% of polysaccharides and 1 to 2.5% of caffeine, and coffee develops the distinctive coffee flavor and color tone when the green coffee bean is roasted, whereby the luxuriousness and preferableness of coffee are brought out. However, in some cases, caffeine included in coffee as the main component is not desirable for reasons of physiological activity and health. Under the circumstance, various methods for removing or reducing caffeine from coffee have been studied up to date.

For example, Japanese Unexamined Patent Application Publication No. 53-18772 discloses a method in which a caffeine content in coffee is reduced by processing with carbon dioxide a mixture of coffee and an adsorbent such as active carbon in the presence of water under heating and an applied pressure; Japanese Unexamined Patent Application Publication No. 6-142405 discloses a method for selectively removing caffeine by causing a caffeine containing aqueous solution to contact an activated clay or an acid clay; and Japanese Unexamined Patent Application Publication No. 2006-174746 discloses a method in which a caffeine containing green coffee bean extract is dissolved in a mixed solution of an organic solvent and water and caused to contact an active carbon and/or an active clay or an acid clay to produce a decaffeinated green coffee bean extract. However, these methods for removing or reducing caffeine or the like from coffee are not satisfactory in the aspect of processing cost.

Further, disclosures include coffee-like foods and drinks having the flavor and color tone close to coffee prepared by using materials other than coffee bean in place of coffee. For example, Japanese Unexamined Patent Application Publication No. 2-195849 discloses a food in which a coffee flavor is added to and mixed with a roasted and ground product of dried dandelion root; and Japanese Unexamined Patent Application Publication No. 52-130956 discloses a bitter taste imparting additive for powdered instant coffees or the like, prepared by adding and mixing a moisture inhibitor and a powdering agent to an extract obtained by crushing the root of chicory and extracting the crushed root with hot water. Japanese Unexamined Patent Application Publication No. 2000-189123 discloses a coffee-like food or drink composition having the coffee flavor and color tone consisting of an extract obtained by extracting roasted black soybean, soybean and adzuki bean; Japanese Unexamined Patent Application Publication No. 2002-536957 discloses the use, as a coffee substitute flavor imparting agent, of a coffee substitute fluid obtained by heating a mixture of defatted soybean powder and water under an applied pressure. Japanese Patent Publication No. 60-27501 discloses a coffee-like beverage with the distinctive coffee flavor maintained in which an extract of dandelion root is mixed with a caffeine free coffee percolate prepared by roasting, grinding and immersing caffeine free coffee beans.

Japanese Unexamined Patent Application Publication No. 2006-262890 discloses a coffee-like supplement consisting of a Maillard reaction product obtained by reacting green coffee bean to a nicotinic acid compound at a comparatively low temperature of below 200°C; Japanese Unexamined Patent Application Publication No. 2007-82460 discloses a coffee-like food or drink composition having the flavor close to coffee in which a dried and powdered dandelion root is mixed with a dried and powdered Korean ginseng; and Japanese Unexamined Patent Application Publication No. 2008-22845 discloses a coffee-like food having the coffee taste obtained by mildly roasting a crushed product of palm fruits such as seeds of coconut and palm coconut, palm coconut fruits. However, these are not satisfactory in term of the taste.

As described above, various methods have been disclosed up to date as the methods for changing components included in coffee or methods for providing coffee-like components in which components included in coffee are substituted, however, from the viewpoints of processing cost, flavors, tastes, and the like, thereof, the products obtained by these methods do not necessarily offer the luxuriousness and preferableness competitive with those of coffee in itself, thereby causing the demand in further development of coffee substitutes imparted with the flavor and taste distinctive of coffee.

### Prior Art Documents

### Patent Documents

Patent Document 1 Japanese Unexamined Patent Application Publication No. 53-18772
Patent Document 2 Japanese Unexamined Patent Application Publication No. 6-142405
Patent Document 3 Japanese Unexamined Patent Application Publication No. 2006-174746
Patent Document 4 Japanese Unexamined Patent Application Publication No. 2-195849
Patent Document 5 Japanese Unexamined Patent Application Publication No. 52-130956
Patent Document 6 Japanese Unexamined Patent Application Publication No. 2000-189123
Patent Document 7 Japanese Unexamined Patent Application Publication No. 2002-536957
Patent Document 8 Japanese Patent Publication No. 60-27501
Patent Document 9 Japanese Unexamined Patent Application Publication No. 2006-262890
Patent Document 10 Japanese Unexamined Patent Application Publication No. 2007-82460
Patent Document 11 Japanese Unexamined Patent Application Publication No. 2008-22845

### Summary of the Invention

### Object to be Solved by the Invention

An object of the present invention is to provide a coffee substitute having a coffee-like flavor, specifically to provide a coffee substitute imparted with the distinctive coffee flavor and taste and further having a reduced amount of component such as caffeine, which is included as a main component of coffee but sometimes undesirable for reasons of physiological activity and health. Such a coffee substitute can be used as a starting material for coffee-like beverages or as an additive for preparing coffee taste imparted or enriched foods and drinks.

### Means to Solve the Object

The present inventors carried out extensive studies on the development of a coffee substitute imparted with the distinctive coffee flavor and taste to solve the above object and found that a product obtained by subjecting a raw material composition formed by combining a sugar and amino acids in the presence of chlorogenic acid, to Maillard reaction under predetermined conditions has the coffee taste, whereby the present invention has been accomplished. Compounds to be such a raw material do not contain caffeine, and consequently the foods and drinks produced by using the Maillard reaction product are also caffeine free. Accordingly, such a food, while having a coffee-like taste, can be foods and drinks offering the delight of coffee flavor for consumers without ingesting caffeine.

More specifically, the present invention consists of the coffee substitute obtained by subjecting a raw material composition formed by combining amino acids, a chlorogenic acid and a sugar to a roasting process under predetermined conditions. With the preparation of the coffee substitute of the present invention, the weight ratio of amino acid to sugar is preferably 0.003/1 to 30/1 and the weight ratio of chlorogenic acid to sugar is preferably 0.02/1 to 200/1. With the preparation of the coffee substitute of the present invention, the roasting process adopts the conditions of 90 to 250°C, 1 or more minutes, preferably 1 to 270 minutes.

The present invention encompasses the invention of the foods and drinks imparted with coffee flavor prepared by using the coffee substitute of the present invention. The foods and drinks imparted with coffee flavor can also be provided in the form of packaged beverages or the like.

Further, the present invention encompasses the invention of a method for producing a coffee substitute, comprising: combining amino acids preferably including arginine, a chlorogenic acid and a sugar so that a weight ratio of amino acids to sugar is 0.003/1 to 30/1 and a weight ratio of chlorogenic acid to sugar is 0.02/1 to 200/1, to form a raw material composition; and subjecting the composition to a roasting process at 90 to 250°C for 1 or more minutes, preferably 1 to 270 minutes.

More specifically, the present invention includes (1) a coffee substitute obtained by subjecting a raw material composition formed by combining an amino acid, a chlorogenic acid and a sugar to a roasting process; (2) the coffee substitute according to the above (1), wherein a weight ratio of an amino acid to a sugar is 0.003/1 to 30/1; (3) the coffee substitute according to the above (1) or (2), wherein a weight ratio of a chlorogenic acid to a sugar is 0.02/1 to 200/1; (4) the coffee substitute according to any one of the above (1) to (3), wherein the roasting process is carried out at 90 to 250°C for 1 or more minutes, preferably 1 to 270 minutes; (5) a food or drink imparted with coffee flavor, prepared by using the coffee substitute of any one of the above (1) to (4) ; and (6) the food or drink imparted with coffee flavor according to the above (5), wherein the food or drink imparted with coffee flavor is a packaged beverage.

The present invention further includes (7) a method for producing a coffee substitute comprising: combining an amino acid, a chlorogenic acid and a sugar so that a weight ratio of the amino acid to the sugar is 0.003/1 to 30/1 and a weight ratio of the chlorogenic acid to the sugar is 0.02/1 to 200/1, to form a raw material composition; and subjecting the raw material composition in powder form to a roasting process at 90 to 250°C for 1 or more minutes, preferably 1 to 270 minutes.

### Effect of the Invention

The present invention provides a coffee substitute having the flavor close to coffee and useful to be a coffee-like beverage or to be an additive for preparing foods and drinks imparted with coffee flavor. Further, the present invention provides a coffee substitute imparted with the distinctive coffee flavor and taste and having a reduced amount of component such as caffeine, which is included as a main component of coffee but sometimes undesirable for reasons of physiological activity and health. Furthermore, the present invention provides foods and drinks imparted with coffee flavor prepared by using the coffee substitute of the present invention. Such foods and drinks imparted with coffee flavor are also provided in the form of packaged beverage or the like.

### Mode of Carrying Out the Invention

The present invention includes a coffee substitute obtained by subjecting a raw material composition formed by combining amino acids, a chlorogenic acid and sugars to a roasting process. Further, the present invention includes a method for producing a coffee substitute having the coffee taste by subjecting a raw material composition formed by combining a sugar and amino acids, preferably including arginine in the presence of chlorogenic acid to a roasting process at a temperature of 90 to 250°C for a roasting process time of 1 or more minutes, preferably 1 to 270 minutes.

In the present invention, the amino acids contained in the raw material composition for producing the coffee substitute optionally include peptides obtained by enzymatically decomposing proteins, but amino acids are preferable. This is because the sufficient number of amino groups, which can be the substrate for Maillard reaction, per unit weight of the amino acids can be secured. The kind of amino acid is not particularly limited and the taste is controllable depending on the amino acid used. When peptides are used, those derived from soybeans or corns and yeast extracts are preferably used.

In the present invention, the sugar contained in the raw material composition for producing the coffee substitute can be any reducing sugar as long as it can be a substrate for Maillard reaction. The sugar used in the present invention can be any of the monosaccharides, disaccharides, oligosaccharides and mixtures thereof, but, from the viewpoint of securing the sufficient number of reducing group per unit weight, monosaccharides and disaccharides are particularly preferable. On the other hand, from the aspect of taste, the kind of sugar can control the taste of Maillard reaction product.

In the present invention, the chlorogenic acid used for producing the coffee substitute can be any of a chemically synthesized product, a product obtained by biochemical methods, an extract from various plants' seeds or leaves (for example, a leaf of heavenly bamboo, a unripe fruit of apple, a sunflower seed, burdock, a skin of eggplant, a fruit of Japanese apricot and a green coffee bean) and a further purified product thereof. Examples of the preferable plant derived raw material include, from the viewpoints of easy availability and cost, a material derived from *Eucommia ulmoides,* a material derived from Japanese honeysuckle, a material derived from blueberry and a material derived from green coffee bean.

In the present invention, amino acids, a chlorogenic acid and a sugar is combined such that the weight ratio of amino acid to sugar is 0.003/1 to 30/1 and the weight ratio of chlorogenic acid to sugar is 0.02/1 to 200/1, to form the raw material composition for producing the coffee substitute.

The production of the coffee substitute of the present invention needs to include the raw material composition preparation step and the roasting step. The raw material composition preparation step involves mixing the coffee substitute production raw materials consisting of amino acids, a chlorogenic acid and sugar, and the mixing is carried out by any method. For example, the production raw material is dissolved in water, mixed thoroughly and dried or made into a paste to form the raw material composition. In the roasting process, the composition is roasted in a state in which the moisture is removed as much as possible. Specifically, it is preferable to achieve a moisture content of 20% or less, more preferably 15% or less, further preferably 12% or less. Preferable content of such raw materials is described below. More specifically, the weight ratio of amino acid to sugar is preferably 0.003/1 to 30/1, more preferably 0.003/1 to 1/1, further preferably 0.01/1 to 0.3/1. The weight ratio of chlorogenic acid to sugar is preferably 0.02/1 to 200/1, more preferably 0.02/1 to 8/1, further preferably 0.2/1 to 2/1.

The roasting process step is the step in which the raw material composition is heated to cause Maillard reaction. In the roasting process, the roasting intensity can be set by temperature and time per amount of raw material. More specifically, the roasting intensity can be set according to the intended taste and the like of the coffee substitute. For example, when the lightly roasted coffee-like taste is desired, the roasting intensity is set weak, whereas when the extra roasted coffee-like taste is desired, the roasting intensity is set strong. The roasting temperature adopted at this step is 90 to 250°C, preferably 90 to 180°C, further preferably 100 to 150°C. This is because Maillard reaction more suitably proceeds. Additionally, the roasting temperature can be set constant throughout the entire step of roasting process, but is optionally increased or decreased. For example, there is a method in which a brown caramelized composition is prepared by roasting at a comparatively low temperature, followed by roasting the caramelized composition at a comparatively high temperature of 150°C to obtain the coffee substitute of the present invention. It is preferable to adopt a roasting time of 1 or more minutes, more preferably 10 or more minutes.

The coffee substitute of the present invention can be used in any form. For example, the coffee substitute of the present invention can be ingested without further treatment or by mixing with a food. For example, when the coffee substitute is dissolved in water, a coffee extract like solution is obtained which can be enjoyed like an instant coffee. In the industrial processes for producing foods and drinks, the coffee substitute can be used suitably by being mixed. When the food and drink to be produced is a beverage, for example, the coffee substitute can be used by being added during the formulation step. Alternatively, a coffee extraction liquid or a coffee essence (hereinafter referred to as "coffee extracts or the like") can be additionally used in foods and drinks to be produced. Foods and drinks consisting of the coffee substitute of the present invention and the coffee extract or the like, have an advantage of having a reduced content of caffeine when compared with the case in which the coffee extract or the like is singly used.

Hereinafter, the present invention is specifically described with reference to Examples, but is not limited thereto.

### Examples

### (Coffee extract)

In Examples of the present invention, the coffee extract used when the evaluation was made was obtained by the following technique. 1500 g of hot water was added to 100 g of ground coffee beans and the extraction was carried out for 5 minutes. The solid was separated from the liquid, which was cooled to 20°C, suitably followed by dilution with ion exchange water to achieve a predetermined concentration and used for the evaluation.

### [Test I: Preparation of a roasted product comprising a sugar, a chlorogenic acid and amino acids]

A roasted product consisting of a sugar, a chlorogenic acid and amino acids was prepared and added to coffee to examine the flavor.

### (Example 1)

### <Test method>

Powders were formed so that a weight ratio of sucrose, a chlorogenic acid (derived from *Eucommia ulmoides,* a content ratio 98% or more, manufactured by Qingdao BNP Co., Ltd.) and lysine (manufactured by KYOWA HAKKO BIO CO., LTD.) was 1:0.1:0.3. 44.7 g of the formed powders were taken out, to which 6.6 g of ion exchange water was added to prepare a pasty mixture. The mixture was heated for 5 minutes in a commercial skillet on an IH heater 260W to obtain a brown caramelized composition. At this procedure, 1.1 g of the raw material weight was lost when compared with that of before the mixture was heated and it was revealed that the added water evaporates. The caramelized composition was moved to a tray, cooled at 5°C. The solid was crushed, and 5 g thereof was weighed out, and heated at 120°C for 90 minutes using an electric oven. The obtained blackish brown mass was ground to a powder and used to be a sample of the roasted product. The obtained roasted product was added to the coffee extract adjusted to 0.65°Bx so as to be 0.3 wt.% and the mixture was adjusted to have a pH of 5.5 using an aqueous solution of 1 M potassium hydroxide to use as a formulated preparation.

### <Evaluation>

The obtained formulated preparation was subjected to the sensory evaluation, which was performed at room temperature by 3 trained panelists. The relative evaluation was made based on whether the coffeeness, the overall evaluation of bitterness, acidity and astringency, was increased when compared with a comparison control to which the roasted product was not added (Comparative Example 1: the coffee extract was diluted to 0.65°Bx and adjusted to have a pH of 5.5 with an aqueous solution of 1 M potassium hydroxide). The evaluation was performed on a 3-grade scale (○: coffeeness is definitely increased, Δ: coffeeness is slightly increased, x: coffeeness is not increased). As a result, the roasted product obtained in Example 1 was confirmed to be the composition capable of enriching the coffeeness.

### [Test II: Study on roasting conditions]

Roasted products were prepared under different roasting conditions and added to coffee to examine the flavor thereof.

### (Example 2)

### <Test method>

In the same manner as in Test I, sucrose, chlorogenic acid and lysine were added to have a weight ratio of 1:0.1:0.3, ion exchange water was added thereto and the mixture was heated in a commercial skillet. The obtained caramelized composition was heated in an electric oven at different temperatures and times. The heating temperatures and times are shown in Table 1. Subsequently, as in Test I, formulated preparations were prepared.

**[Table 1]**

| | | Heating time [min] | | | | | | |
|---|---|---|---|---|---|---|---|---|
| | | 0 | 1 | 5 | 10 | 30 | 90 | 270 |
| Heating temperature [°C] | 90 | ● | ● | - | ● | - | ● | ● |
| | 100 | | - | - | ● | - | ● | - |
| | 120 | | ● | ● | ● | ● | ● | ● |
| | 150 | | - | - | ● | - | ● | - |
| | 180 | | ● | - | ● | - | ● | ● |

| | | | | | | | | |
|---|---|---|---|---|---|---|---|---|
| ● The conditions for carrying out the test. | | | | | | | | |

### <Evaluation>

The obtained formulated preparations were subjected to the sensory evaluation in comparison with the control (Comparative Example 1) by the same method as in Test I. The results are shown in Table 2. The results revealed that the increase in coffeeness is noted when the heating temperatures range from 90°C to 180°C and it is more preferable to set the temperature from 100°C to 150°C. Further, it was revealed that the heating using an electric oven requires 1 or more minutes, more preferably 10 or more minutes.

**[Table 2]**

| | | Heating time [min] | | | | | | |
|---|---|---|---|---|---|---|---|---|
| | | 0 | 1 | 5 | 10 | 30 | 90 | 270 |
| Heating temperature [°C] | 90 | × | Δ | - | Δ | - | Δ | Δ |
| | 100 | | - | - | ○ | - | ○ | - |
| | 120 | | Δ | Δ | ○ | ○ | ○ | ○ |
| | 150 | | - | - | ○ | - | ○ | - |
| | 180 | | Δ | - | Δ | - | Δ | Δ |

### [Test III: Study on usable amino acids]

Using the sucrose and chlorogenic acid used in the above Test I, the study on usable amino acids was conducted. In the same manner as in Test I, the addition was carried out so that the weight ratio of the total weight of sucrose:chlorogenic acid:amino acids was 1:0.1:0.3 to prepare a roasted product and the sensory evaluation was performed. The preparation method of the roasted product and the preparation method of the formulated preparation to be used for the sensory evaluation were carried out by the same technique as in Test I. The roasting process was carried out by heating using an electric oven at 120°C for 90 minutes in Examples 3 to 10 and at 200°C for 2 minutes in Examples 11 to 21. Further, the amino acids were used in the addition ratios as shown below.

### <Test method>

(Example 3): arginine was used as the amino acid.
(Example 4): glycine was used as the amino acid.
(Example 5): alanine was used as the amino acid.
(Example 6): sodium aspartate was used as the amino acid.
(Example 7): glutamine was used as the amino acid.
(Example 8): leucine was used as the amino acid.
(Example 9): valine was used as the amino acid.
(Example 10): the amino acids were added so that the weight ratio of arginine:lysine:sodium aspartate was 18:34:50.
(Example 11): the amino acids were added so that the weight ratio of arginine:lysine:serine:threonine was 18:34:29:19.
(Example 12): the amino acids were added so that the weight ratio of arginine:lysine:serine:threonine:glycine was 18:34:29:19:5.
(Example 13): the amino acids were added so that the weight ratio of arginine:lysine:serine:threonine:alanine was 18:34:29:19:7.
(Example 14): the amino acids were added so that the weight ratio of arginine:lysine:serine:threonine:leucine was 18:34:29:19:10.
(Example 15): the amino acids were added so that the weight ratio of arginine:lysine:serine:threonine:valine was 18:34:29:19:9.
(Example 16): the amino acids were added so that the weight ratio of arginine:lysine:serine:threonine:phenylalanine was 18:34:29:19:6.
(Example 17): the amino acids were added so that the weight ratio of arginine:lysine:serine:threonine:tyrosine was 18:34:29:19:4.
(Example 18): the amino acids were added so that the weight ratio of arginine:lysine:serine:threonine:tryptophan was 18:34:29:19:10.
(Example 19): the amino acids were added so that the weight ratio of arginine:lysine:serine:threonine:proline was 18:34:29:19:7.
(Example 20): the amino acids were added so that the weight ratio of arginine:lysine:serine:threonine:cystine was 18:34:29:19:2.
(Example 21): the amino acids were added so that the weight ratio of arginine:lysine:serine:threonine:histidine was 18:34:29:19:3.

### <Evaluation>

The obtained Examples 3 to 21 and Example 1 demonstrated in Test I were subjected to the sensory evaluation in comparison with the control (Comparative Example 1) by the same method as in Test I. As a result, it was verified that the coffeeness is increased with any of the amino acids added. Further, it was revealed that different flavors are resulted in accordance with the amino acid used as characterized in glycine when used singly imparts sweetness and alanine when used singly intensifies bitterness (Tables 3 and 4). As described above, it was demonstrated that the flavor designing tailored for the purpose is enabled by varying the raw material amino acid composition.

**[Table 3]**

| | Amino acid used | Evaluation result | Comment on evaluation |
|---|---|---|---|
| Example 1 | Lysine | ○ | Intense bitterness |
| Example 3 | Arginine | ○ | Intense bitterness |
| Example 4 | Glycine | ○ | Sweetness noted |
| Example 5 | Alanine | ○ | Intense bitterness |
| Example 6 | Sodium aspartate | ○ | Refreshing sensation |
| Example 7 | Glutamine | ○ | Burnt flavor |
| Example 8 | Leucine | ○ | Long lasting bitter aftertaste |
| Example 9 | Valine | ○ | Tree bark like flavor |

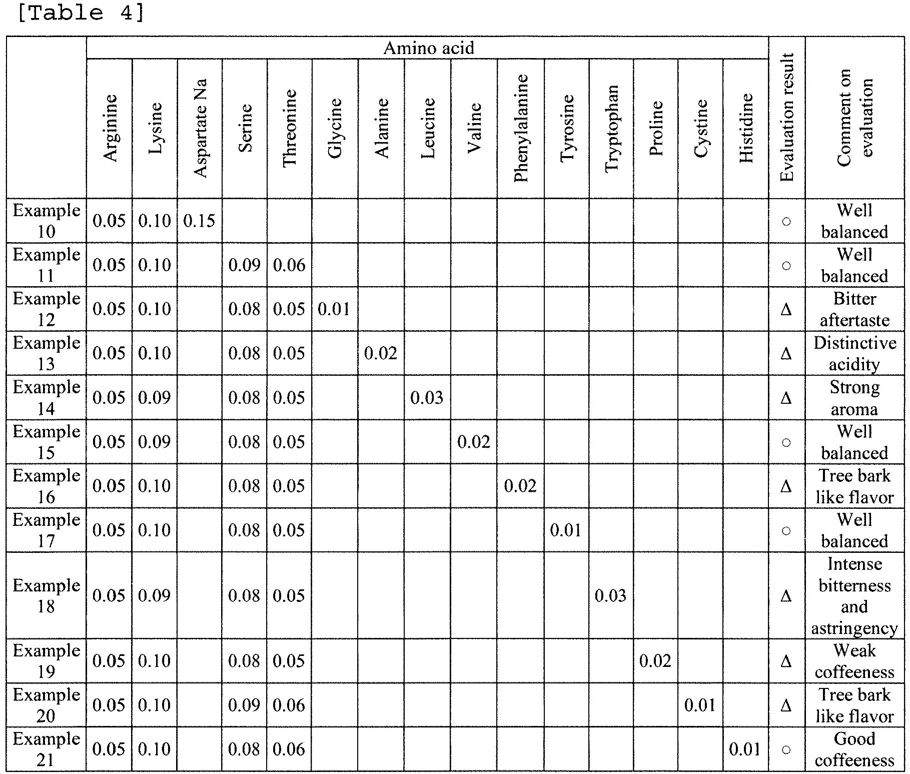

### [Test IV: Study on heating reaction using an aqueous solution in which raw materials are dissolved]

A heating reaction product was produced by heating an aqueous solution in which sucrose, a chlorogenic acid, and amino acids were dissolved, and the heating reaction product was added to coffee to examine the flavor.

### (Comparative Example 2)

### <Test method>

Powders were added so that a weight ratio of sucrose, chlorogenic acid and lysine was 1:0.1:0.3. 20 g of the added powders was taken, 80 g of ion exchange water was added thereto to dissolve the powder raw materials therein and an aqueous solution of raw materials was prepared. The aqueous solution was heated at 120°C for 90 minutes in an autoclave, thereby obtaining a blackish brown aqueous solution of heating reaction. The obtained aqueous solution was added to the coffee extract adjusted to 0.65°Bx to have a solid content of 0.3 wt.% and adjusted to have a pH of 5.5 using an aqueous solution of 1 M potassium hydroxide to be used as a formulated preparation.

### <Evaluation>

The obtained Comparative Example 2 and Example 1 demonstrated in Test I were subjected to the sensory evaluation in comparison with the control (Comparative Example 1) by the same method as in Test I. As a result, it was revealed that the increase in coffeeness is not noted in Comparative Example 2 and the coffeeness is not achieved when the aqueous solution in which the raw materials are dissolved is heated.

### [Test V: Study for the use to be the coffee substitute]

A roasted product prepared by using the sucrose, chlorogenic acid and amino acids used in the above Test I was studied if it can be used as the coffee substitute.

### (Example 22)

### <Test method>

A 0.6 wt.% aqueous solution of the roasted product used in Example 1 was prepared and adjusted to have a pH of 5.5 using an aqueous solution of 1 M potassium hydroxide to obtain a formulated preparation.

### <Evaluation>

The obtained formulated preparation was subjected to the sensory evaluation conducted at room temperature by 3 trained panelists. The evaluation was carried out on a 3-grade scale (○: coffeeness is noted, Δ: coffeeness is slightly noted, x: coffeeness is not noted). As a result, it was verified that the roasted product itself obtained by this technique has the coffeeness and is the composition that can be the substitute for a coffee bean extract or an instant coffee.

### [Test VI: Study using peptides]

Using the sucrose and chlorogenic acid used in the above Test I, the study was conducted to examine if a peptide as the amino acid source can increase the coffeeness.

### <Test method>

The raw materials were combined so that the weight ratio of sucrose:chlorogenic acid:peptide was 1:0.1:0.3 to prepare a roasted product in the same manner as in Example 1, and a formulated preparation was prepared. Further, the peptides shown below were used.

(Example 23): Peptide used was WA-3 (a soybean derived protein hydrolyzate, manufactured by Kirin Kyowa Foods Company).
(Example 24): Peptide used was HPP-3H3 (a corn derived protein hydrolyzate, manufactured by Kirin Kyowa Foods Company).
(Example 25): Peptide used was HPP-2B (a brewer's yeast derived protein hydrolyzate, manufactured by Kirin Kyowa Foods Company).

### <Evaluation>

The obtained Examples 23 to 25 were subjected to the sensory evaluation in comparison with the control (Comparative Example 1) by the same method as in Test I. As a result, it was verified that the coffeeness is able to be increased even when the peptide is used without using amino acids (Table 5). Further, the peptides were able to impart a delicate taste unlike the case in which only amino acids were used.

**[Table 5]**

| | Peptide source | Evaluation result |
|---|---|---|
| Example 23 | Soybean | ○ |
| Example 24 | Corn | ○ |
| Example 25 | Brewer's yeast | ○ |

### [Test VII: Study on usable sugars]

Using the chlorogenic acid used in the above Test III and the amino acid mix used in Example 11, the study on usable sugars was carried out. As in Test I, the raw materials were combined so that the weight ratio of the total weight of sugar:chlorogenic acid:amino acids was 1:0.1:0.3 to prepare a roasted product in the same manner as in Test I. Only the electric oven heating was carried out under different conditions of at 200°C for 2 minutes. The preparation method of the formulated preparation and the sensory evaluation method were carried out by the same technique as in Test I. The sugars shown below were used.

### <Test method>

(Example 26): the sugar used was glucose.
(Example 27): the sugar used was fructose.

### <Evaluation>

The obtained Examples 26 and 27 and Example 11 demonstrated in Test III were subjected to the sensory evaluation in comparison with the control (Comparative Example 1) by the same method as in Test I. As a result, the coffeeness was able to be increased with any of the sugars used. Further, it was revealed that the flavors are characterized in accordance with the sugar used as in when glucose is used, the flavor with strong acidity like light roast coffee is imparted and when fructose is used, a roast-like bitterness is noted (Table 6). As described above, it was demonstrated that the flavor designing tailored for the purpose is enabled by varying the raw material sugar composition.

**[Table 6]**

| | Sugar | Evaluation result | Comment on evaluation |
|---|---|---|---|
| Example 11 | Sucrose | ○ | Intense bitterness |
| Example 26 | Glucose | ○ | Acidic like lightly roasted coffee |
| Example 27 | Fructose | ○ | Burnt bitterness noted |

### [Test VIII: Study on usable chlorogenic acid source]

Using the sucrose used in the above Test III and the amino acid mix used in Example 11, the study on usable chlorogenic acid source was carried out. Roasted products were prepared in the same manner as in Test I except that only the electric oven heating was carried out under different conditions of at 200°C for 2 minutes. The preparation method and the sensory evaluation method of the formulated preparation were carried out by the same technique as in Test I.

### <Combination Examples>

(Example 28): A chlorogenic acid source derived from Japanese honeysuckle (a content ratio of 99% or more, manufactured by ChangSha Organic Herb Inc.) was used and the raw materials were combined so that the weight ratio of the total weight of sucrose:chlorogenic acid:amino acids was 1:0.2:0.3.
(Example 29): A chlorogenic acid source derived from blueberry (a content ratio of 25% or more, manufactured by ChangSha Organic Herb Inc.) was used and the raw materials were combined so that the weight ratio of the total weight of sucrose:chlorogenic acid:amino acids was 1:0.05:0.3.
(Example 30): A chlorogenic acid source derived from green coffee bean (a content ratio of 45% or more, manufactured by Oryza Oil & Fat Chemical Co., Ltd.) was used and the raw materials were combined so that the weight ratio of the total weight of sucrose:chlorogenic acid:amino acids was 1:0.09:0.3.

### <Evaluation>

The obtained Examples 28 to 30 and Example 11 demonstrated in Test III were subjected to the sensory evaluation in comparison with the control (Comparative Example 1) by the same method as in Test I. As a result, it was verified that the coffeeness is achieved as long as a chlorogenic acid is included regardless of the origin of raw material (Table 7).

**[Table 7]**

| | Chlorogenic acid source | Evaluation result |
|---|---|---|
| Example 11 | *Eucommia ulmoides* | ○ |
| Example 28 | Japanese honeysuckle | ○ |
| Example 29 | Blueberry | ○ |
| Example 30 | Green coffee bean | ○ |

### [Test IX: Study on the ratio of sugar, chlorogenic acid and amino acid]

Using the sucrose and chlorogenic acid used in the above Test III and the amino acid mix used in Example 11, the study on the content ratio was carried out.

### <Test method>

(Examples 31 to 37, Comparative Examples 3 and 4): Sucrose:chlorogenic acid:amino acid mix were combined in the ratios shown in Table 8. The preparation method of the roasted product and the preparation method of the formulated preparation to be used for the sensory evaluation were carried out by the same technique as in Test I.

### <Evaluation>

The obtained Examples 31 to 37, Comparative Examples 3 and 4 and Example 11 demonstrated in Test III were subjected to the sensory evaluation in comparison with the control (Comparative Example 1) by the same method as in Test I. As a result, it was revealed that the coffeeness is not achieved when the ratios of chlorogenic acid:sucrose and amino acids:sucrose exceed a certain ratio (Table 8).

**[Table 8]**

| | Sucrose | Chlorogenic acid | Amino acid mix | Evaluation result |
|---|---|---|---|---|
| Example 31 | 1 | 0.02 | 0.003 | Δ |
| Example 11 | 1 | 0.1 | 0.3 | ○ |
| Example 32 | 1 | 0.2 | 0.05 | ○ |
| Example 33 | 1 | 0.6 | 0.05 | ○ |
| Example 34 | 1 | 2 | 0.01 | ○ |
| Example 35 | 1 | 2 | 1 | Δ |
| Example 36 | 1 | 8 | 1 | Δ |
| Example 37 | 1 | 200 | 30 | Δ |
| Comparative Example 3 | 1 | 500 | 30 | × |
| Comparative Example 4 | 1 | 200 | 100 | × |

### [Test X: Study on a packaged beverage which uses the roasted product]

Using the roasted products prepared in the above Test VII, the application thereof to heat sterilized packaged beverages was studied.

### <Test method>

(Examples 38, 39): Using the roasted products used in Examples 3 and 6, the application of the products to a packaged coffee beverage was studied. Using the composition shown in Table 9, the roasted product, sodium bicarbonate and a coffee flavor were combined and ion exchange water was added up to 90% of the predetermined formulation amount. Using an aqueous solution of 1 M potassium hydroxide, the pH was adjusted to 6.5 and ion exchange water was added up to the predetermined formulation amount to obtain a formulated preparation.

Further, for a comparison control, Comparative Example 5, formulated without adding the roasted product, was also prepared. A can was charged with the obtained formulated preparation, sealed and subjected to retort sterilization to obtain a packaged coffee beverage.

**[Table 9]**

| | Percentage content (wt.%) |
|---|---|
| Roasted product | 0.55 |
| Coffee bean* | 2.55 |
| Coffee flavor | 0.15 |
| Sodium bicarbonate | 0.02 |

| | |
|---|---|
| * Extraction efficiency 25.5% | |

### <Evaluation>

The obtained packaged beverages (Examples 38 and 39) were subjected to the sensory evaluation in comparison with the control (Comparative Example 5) by the same method as in Test I. As a result, both Examples 38 and 39 to which the roasted product was added were confirmed to have the enriched coffeeness, thereby revealing that the roasted product is applicable also to a heat sterilized packaged beverage.

### [Test XI: Study on the application to a coffee flavored jelly]

Using the roasted product (Example 11) obtained in the above Test III, the application to a coffee flavored jelly was studied.

<Preparation Example>

(Example 40): Using the roasted product obtained in Example 11, the roasted product, a sugar, a coffee flavor and a commercial gelatin powder were combined in the composition shown in Table 10, and subsequently cooled at 5°C to solidify, thereby obtaining a jelly like food. The obtained jelly like food was subjected to the sensory evaluation by the same method as in Test V. As a result, it was confirmed that the food provides the notable coffeeness in spite of using no coffee. It was thus verified that the prepared roasted product is applicable to not only beverages but also coffee flavored jellies.

**[Table 10]**

| | Percentage content (wt.%) |
|---|---|
| Roasted product | 0.9 |
| Sugar | 10 |
| Coffee flavor | 0.1 |
| Gelatin powder | 1.8 |

### [Test XII: Study on the application to a coffee flavored ice cream]

Using the roasted product (Example 11) obtained in the above Test III, the application to a coffee flavored ice cream was studied.

### <Preparation Example>

(Example 41) : 1 Egg and 30 g of sugar, and 100 g of whipping cream and 10 g of sugar, were respectively whipped up and subsequently mixed, 15 g of cow's milk, 0.84 g of the roasted product obtained in Example 11 and 0.16 g of a coffee flavor were further added thereto and mixed, and the mixture was cooled and solidified in a freezer, thereby obtaining an ice cream. The obtained ice cream was subjected to the sensory evaluation by the same method as in Test V. As a result, it was confirmed that the food provides the notable coffeeness in spite of using no coffee. It was thus verified that the prepared roasted product is applicable also to a coffee flavored ice cream, confirming the applicability of the product as the coffee substitute regardless of the food type.

### [Test XIII: Analysis of the components included in the roasted product]

An analysis was carried out to examine the presence of any component, which was included in the roasted product but not included in the coffee extract.

### <Test method>

The analysis was carried out using a formulated preparation obtained by dissolving the coffee extract adjusted to 1.4°Bx and the roasted product prepared in Example 10 to a 5% concentration and adjusting a pH thereof to 6.0 with an aqueous solution of 1 M potassium hydroxide.

### <Analysis method>

An Agilent Technologies high performance liquid chromatography (1100 series) was connected to a Thermo Fisher Scientific mass spectrometer (Orbitrap XL) and a hydrophilic interactive chromatography column Hypersil Gold HILIC (2.1 mmϕ × 100 mm: manufactured by Thermo Fisher Scientific Inc.) was mounted thereon to carry out the analysis at a column temperature of 40°C by the gradient method. The analysis was carried out with the mobile phase A solution being an ultra pure aqueous solution containing 0.1% of formic acid and 10 mM of ammonium formate; B solution being an acetonitrile solution containing 0.1% of formic acid, 10 mM of ammonium formate and 10% of ultra pure water; an amount of sample added of 2 *µ*L; using the mass spectrometer on the positive ion mode and negative ion mode, over a region having a mass range from 50 to 1000.

### <Results>

As a result of the analysis, a polymer of aspartic acid and hexose, a polymer of arginine and hexose, and a polymer of lysine and hexose were detected in the roasted product but not detected in the coffee extract. In the present invention, the reaction is carried out at a lower temperature than the actual coffee bean roasting temperature, because of which the polymers of amino acids and sugars, which are the initial reaction products of Maillard reaction, are anticipated to survive.

### Industrial Applicability

The present invention provides a coffee substitute having the flavor close to coffee and useful to be a coffee-like beverage or to be an additive for preparing foods and drinks imparted with coffee flavor. The present invention particularly provides a coffee substitute imparted with the distinctive coffee flavor and taste and having a reduced amount of component such as caffeine, which is included as a main component of coffee but sometimes undesirable for reasons of physiological activity and health. Furthermore, the present invention provides foods and drinks imparted with coffee flavor prepared by using the coffee substitute of the present invention. Such foods and drinks imparted with coffee flavor can be provided in the form of packaged beverages or the like.

## Claims

1. A coffee substitute obtained by subjecting a raw material composition formed by combining an amino acid, a chlorogenic acid and a sugar to a roasting process.

2. The coffee substitute according to claim 1, wherein a weight ratio of an amino acid to a sugar is 0.003/1 to 30/1.

3. The coffee substitute according to claim 1 or 2, wherein a weight ratio of a chlorogenic acid to a sugar is 0.02/1 to 200/1.

4. The coffee substitute according to any one of claims 1 to 3, wherein the roasting process is carried out at 90 to 250°C for 1 to 270 minutes.

5. A food or drink imparted with coffee flavor, prepared by using the coffee substitute of any one of claims 1 to 4.

6. The food or drink imparted with coffee flavor according to claim 5, wherein the food or drink imparted with coffee flavor is a packaged beverage.

7. A method for producing a coffee substitute comprising: combining an amino acid, a chlorogenic acid and a sugar so that a weight ratio of the amino acid to the sugar is 0.003/1 to 30/1 and a weight ratio of the chlorogenic acid to the sugar is 0.02/1 to 200/1, to form a raw material composition; and subjecting the raw material composition in powder form to a roasting process at 90 to 250°C for 1 to 270 minutes.

8. A coffee substitute containing an initial reaction product of Maillard reaction of an amino acid and a sugar.

9. A food or drink imparted with coffee flavor, containing an initial reaction product of Maillard reaction of an amino acid and a sugar.
